Europäisches Patentamt

(19) **European Patent Office**

**Office européen des brevets**

(11) Publication number: **0 208 238**
**A2**

(12) # EUROPEAN PATENT APPLICATION

(21) Application number: **86108959.7**

(22) Date of filing: **01.07.86**

(51) Int. Cl.⁴: **G 06 F 7/72**

(30) Priority: **10.07.85 JP 150191/85**

(43) Date of publication of application:
**14.01.87 Bulletin 87/3**

(84) Designated Contracting States:
**DE FR GB**

(71) Applicant: **HITACHI, LTD.**
**6, Kanda Surugadai 4-chome Chiyoda-ku**
**Tokyo 100(JP)**

(72) Inventor: **Takaragi, Kazuo**
**Fujigaoka-ryo 7-2, Umegaoka Midori-ku**
**Yokohama-shi Kanagawa-ken(JP)**

(72) Inventor: **Kurashiki, Nobuhiko**
**5-6-8-304, Youkoudai Isogo-ku**
**Yokohama-shi Kanagawa-ken(JP)**

(72) Inventor: **Sasaki, Ryoichi**
**326-7, Shimotsuchidana**
**Fujisawa-shi Kanagawa-ken(JP)**

(72) Inventor: **Nagai, Yasuhiko**
**Ohzenji-ryo 1170, Ohzenji Asou-ku**
**Kawasaki-shi Kanagawa-ken(JP)**

(72) Inventor: **Shiraishi, Takayoshi**
**1-39, Deguchi-machi**
**Chigasaki-shi Kanagawa-ken(JP)**

(72) Inventor: **Nakagawa, Fusao Hitachi-Nijigaoka-ryo**
**3-8-16, Susukino Midori-ku**
**Yokohama-shi Kanagawa-ken(JP)**

(72) Inventor: **Taniguchi, Nobuhiro**
**478-2, Horinishi**
**Hadano-shi Kanagawa-ken(JP)**

(74) Representative: **Strehl, Schübel-Hopf, Groening, Schulz**
**Widenmayerstrasse 17 Postfach 22 03 45**
**D-8000 München 22(DE)**

(54) **High speed residue calculating apparatus.**

(57) Residue calculation included in an RSA encipherment operation process is carried out at a high speed by a simple hardware arrangement, such that a multiple of a predetermined divisor more than two orders in magnitude larger than the divisor is stored in a memory (105) or that a partial residue relative to the divisor in each section defined by splitting an optional dividend into given unitary digit figures is stored in a memory, thus performing residue calculation of the given dividend while referring to the content of the memory (105).

EP 0 208 238 A2

./...

Croydon Printing Company Ltd.

FIG. 1

INPUT
(DIVIDEND) 101

REGISTER(A) 102

COMPARATOR 108

OUTPUT
(RESIDUE) 110

111

103 REGISTER(I)

CONTROLLER 109
INTERNAL
MEMORY

106 REGISTER(S)

107 SUBTRACTOR

105 REGISTER(ri)

112

104

| 0----0 | 0----0 X ------- X |
| 0----1 | 0----1 X ------- X |
| (MULTIPLE TABLE) | |
| 1----1 | 1----1 X ------- X |

i            ri

## HIGH SPEED RESIDUE CALCULATING APPARATUS

### Field of the Invention

This invention relates to a modulus calculation (residue calculation) for obtaining a residue at a high speed in relation to an optional value modulo a specific value. The apparatus according to the present invention is most suitable for carrying out a high-speed enciphering calculation based on a ciphering method represented by an RSA method involving a calculation as a part of an algorism for an enciphering process.

### BACKGROUND OF THE INVENTION

One of the most effective methods heretofore known as using a public key encipher algorism is an RSA method in which, when assuming a normal sentence to be M; cipher sentence, C; and key encipher, e, d and n (e $\neq$ d), the enciphering and deciphering algorisms are represented by:

$$C = M^e \pmod{n} \text{ : encipher}$$

$$M = C^d \pmod{n} \text{ : decipher.}$$

The suitable magnitude of each key encipher is considered such that $n \geq 2^{400}$ and $e \cdot d \geq 2^{400}$,

in terms of cipher intensity.  However, in this case, the amount of cipher calculation is increased because of the large values of the key enciphers.

In conventional hardware for carrying out the RSA method, the above enciphering and deciphering are carried out in the processing steps as follows. It is assumed here that e is represented as the value of a (u + 1) digit binary number by:

$$e = E(u) \cdot 2^u + E(u-1) \cdot 2^{u-1} + \cdots + E(0) \cdot 2^0$$

where E(i) represents a value in the i place of the binary number e.

Step. 1 : C ← 1

Step. 2 : for i = u to 0 step-1

    ( a )    M 1 ← C ; M 2 ← C ;

             R ← M 1 × M 2 (mod n) ;

             C ← R ;

    ( b )    if E ( i ) = 1   then M 1 ← C ; M 2 ← M ;

             R ← M 1 × M 2 (mod n) ;

             C ← R ;

         next i

Step. 3 : Halt.

For the above Steps 1 to 3, a loop calculation is repeated (u + 1) times. In a first loop calculation, the value of M is obtained as C when $E(u) = 1$. In a t-th loop calculation, C is obtained as the residue of the product of values of M and squared values of C calculated in relation to $i = u$ to $i = t + 1$ when $E(t) = 1$. When $E(t) = 0$, a residue is obtained from squared values obtained in relation to $i = u$ to $i = t + 1$. In this way,

$$M \doteq M^{E(u) \cdot 2^u} \cdot M^{E(u-1) \cdot 2^{u-1}} \cdots \cdots M^{E(0) \cdot 2^0}$$

is recursively calculated.

In the above process, it is a modulus calculation (residue calculation) that takes the longest calculation time. This calculation is an unit of the calculation of an RSA encipher algorism:

$$R = M1 \times M2 \pmod{n}$$

A calculation method for executing this pair of a multiplication and a division will be shown below by assuming that:

Qj: a quotient in the calculating process,

Rj: a residue in the calculating process,

M1, M2: residues in the calculating process,

M2, j: a j-th k-bit column in M2 equally

divided by $\ell$ per bit.

$$\therefore k \cdot \ell = m \quad (m; \text{ the number of digits of M2})$$

$$M2 = M2, \ell \cdot 2^{(\ell-1)k} + M2, (\ell-1) \cdot 2^{(\ell-2)k}$$

$$+ \cdots + M2, 1 \cdot 2^{0}$$

[*]: the maximum integral number not more than *.

<The calculation algorism of R = M1 x M2 (mod n)>

Step.1 : $R\ell + 1 \leftarrow 0$

Step.2 : for $j = \ell$ to 1 step-1

$Qj \leftarrow [\{(2^k \cdot Rj+1) + (M1 \cdot M2, j)\}$

$\div n]$

$Rj \leftarrow (2^k \cdot Rj+1) + (M1 \cdot M2, j) - Qj \cdot n$

next j

Step.3 : Halt

$$\{R = R1 = M1 \times M2 (\text{mod } n)\}$$

According to a known method (refer to Shoji Miyakuchi "High-speed Calculation Method and Construction of Encipher LSI for RSA Public Key Encipher", Information Processing Society of Japan Paper, Nov. 1983, Vol. 24, No. 6, pp 764 to 771),

- 5 -

0208238

approximation and correction processes are carried out for the purpose of speeding the calculation of Qj. In this example, the number of encipher LSI hardwares is increased in accordance with the degree of speedup, and the calculation algorism is so complicated. Moreover, the processing speed is reduced because it involves numbers of processing steps for divisions.

SUMMARY OF THE INVENTION

An object of the present invention is to provide a practical RSA public key encipher apparatus by speeding up, with a simple device, a modulus calculation (residue calculation) which is the unit of the encipher algorism based on the RSA method so as to enable a high-speed enciphering process of this method.

To this end, as the first feature of the present invention, a plurality of multiples of the predetermined divisor which are two or more orders in magnitude larger than the values of the divisor are stored in an external memory so as to enable the residue to be obtained at a high speed without increasing the number of elements of the calculating apparatus.

A division based on the $2^k$-digit notation (k ≥ 2) is executed in accordance with the present invention. That is, a subtraction is carried out by applying a value, which is calculated from a quotient obtained per k digits (k ≥ 2), to a subtracter in the executing process of the division. Then, the number of total repetition times becomes about {(the number of digits of the dividend) - (the number of digits of the divisor)} - k times. In this case, it is necessary to calculate the multiple relative to the divisor. For this purpose, according to the present invention, the value of the multiple of the divisor is previously calculated and stored in the external memory, and a multiple table which enables the optional values of the divisor to be directly referred as desired is prepared. When a correspondence sentence to be processed by calculation is input to the calculating apparatus, the quotient calculation is carried out at a high speed by referring to this multiple table in the process of carrying out the division (mod n). This corresponds to an optimized division based on the $2^k$ digit notation carried out by a computer which memorizes a multiplication table for $2^k$-digit numbers, as well as an optimized division based on the decimal notation carried out by a man who remembers a multiplication table for decimal numbers. Thus, the high-speed calculation is realized by shortening the time for the process of calculating of multiples.

It is the second feature of the present invention to split the upper m digits of a binary dividend A (2m digits) into unitary k-digit figures ($k \geq 2$) as represented by the following equation, and to carry out addition and correction of the partial residue and the lower m digits S of the dividend obtained at each unit of k digits in relation to a divisor n (m digits), by utilizing the characteristic of multiple-length residue calculation by which addition, subtraction and multiplication are preserved. The residue is thereby obtained at a high speed.

$$A(\text{mod } n) = \{ A\ell \cdot 2^{(\ell-1)k+m} \ (\text{mod } n) + A\ell_{-1} \cdot 2^{(\ell-2)k+m} \ (\text{mod } n) + \ldots + A_1 \cdot 2^m \ (\text{mod } n) + S\}(\text{mod } n)$$

In this case, however, it is necessary to calculate residues in relation to the above divisor n for the dividend for each unit of k digits. According to the present invention, the value of the residue of each dividend (k digit) relative to the divisor is previously calculated and stored in the external memory such as a ROM card, light card or the like, and a dividend/residue table in which the partial residues of optional dividends can be directly referred to as desired is prepared. In addition, a parallel addition method of a bit slice type is adopted for the addition of partial residues in multiple-length.

In the apparatus of the present invention, which refers to the dividend/residue table, the process of obtaining the quotient is omitted, and the multiple-length division is converted into the addition of a plurality of partial residues, thereby enabling the reduction in the number of processing steps along with the parallel calculation. Thus, the speedup of the multiple-length residue calculation can be achieved, and a residue calculating apparatus having a simple construction can be realized.

BRIEF DESCRIPTION OF THE DRAWINGS

Fig. 1 is a block diagram of a high-speed residue calculating apparatus which is the first embodiment of the present invention;

Fig. 2 is a flowchart of the process of residue calculation carried out by the apparatus shown in Fig. 1;

Fig. 3 is block diagram of a high-speed residue calculating apparatus which is the second embodiment of the present invention; and

Fig. 4 is a flowchart of the process of residue calculation carried out by the apparatus shown in Fig. 3.

DETAILED DESCRIPTION OF THE PREFERRED EMBODIMENTS

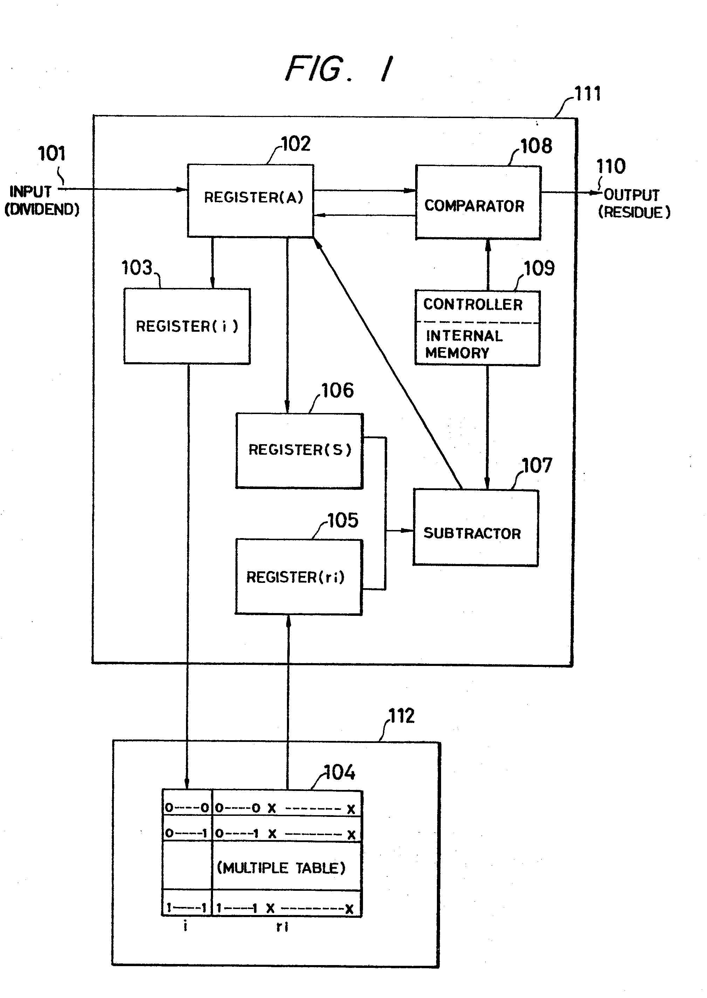

Fig. 1 shows in a block diagram an apparatus which is the first embodiment of the present invention capable of carrying out high-speed residue calculation. This apparatus is composed of two blocks: a high-speed residue calculator 111 for carrying out the residue calculation process; and an external memory 112 including a table in which a plurality of multiples of a divisor are memorized.

An item of input data 101 supplied to this apparatus is the dividend in residue calculation, which is memorized in a register 102. The upper k digits ($k \geq 2$) of the item of data memorized in the register 102 is stored in a register 103, as a parameter i for searching the multiples of the divisor. An item of corresponding multiple data is obtained from a table 104 in which the plurality of multiples of the divisor are memorized by using the value i stored in the register 103. This data is then stored in a register 105, and the upper $(k + q)$ digits of the item of data memorized in the register 102 is stored in a register 106.

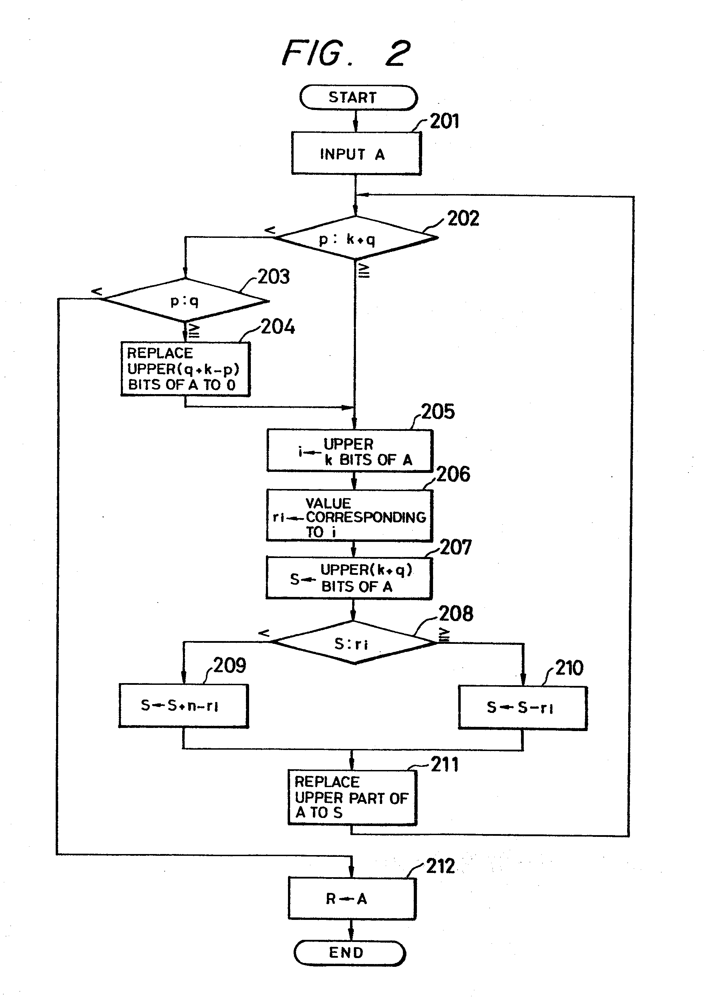

This value q represents the number of digits of the divisor. The data stored in the registers 105 and 106 is processed by a subtractor 107, and a comparator 108 carries out loop and end processes on the basis of the results of the processing in the subtractor 107. These processes are controlled by a controller 109 having an internal memory. An item of output data 110 is obtained as the residue by repeating these processes. Next, the operation of the component elements shown in Fig. 1 will be described with reference to a flowchart shown in Fig. 2 on the basis of the process from the dividend input to the residue output.

<Residue Calculation>

Step 201: A dividend A is inputted.

Step 202: If $p < (k + q)$, the process jumps to Step 203. (p: the number of digits of the dividend A, q: the number of digits of the divisor n)

Step 205: The upper k digits of A is separated and the obtained value is assumed to be i.

Step 206: A multiple $r_i$ is read from a memory area by using i as the parameter.

Step 207: The upper (k + q) digits of A is separated and the obtained value is assumed to be S.

Step 208: If $S < r_i$, the process jumps to Step 209. If $S \geq r_i$, the process jumps to Step 210.

Step 209: $(S + n - r_i) \rightarrow S$ The process jumps to Step 211.

Step 210: $(S - r_i) \rightarrow S$ The process jumps to Step 211.

Step 211: S returns to A, and the process jumps to Step 202.

Step 203: If p < q, the process jumps to Step 212.

Step 204: A group of "0" of (k + q - p) digits is added to the upper place of A, and the process jumps to Step 205.

Step 212: Halt

Residue R = A

The residue can be obtained at a high speed through the above processing steps. In the above process, it is important to consider the value of the multiple $r_i$ of the divisor n.

In preparation for making a multiple $(r_i)$ table, the principle of the table will be described hereunder.

(1)  "i" represents the value of the upper k digits (binary number) of the dividend A, and $0 \leq i \leq 2^k - 1$.

(2)  The smallest integral number in the multiples of the divisor n which are above (i * 2) is assumed to be $r_i$ in relation to each value of i which is not more than $2^k$.

$$r_i = \{ [(i * 2^q) / n] \div 1 \} * n$$
$$= (i * 2^q) / n - \{(i * 2^q)(\bmod\ n)\}$$

where [*] is Gauss' symbol, the smallest integral number in numbers larger than *.

On these conditions, the value of $r_i$ is prepared such as to be a (k + i) digit value whose upper k-digit figure is equal to i.  Accordingly, the divisor becomes a (p - k) digit figure after one cycle of execution of the process defined from blocks 205 to 211 shown in Fig. 2.

The value of the dividend becomes smaller by k digits every time this process is executed, the value of the dividend corresponds to the residue when the number of digits (p) of the dividend becomes equal to or smaller than the number of digits (q) of the divisor.  Lastly, as a simple example of the above-described operation, the flow of the information processing observed when concrete input data is supplied to the apparatus will be described.

<Setting>

Number of Digits:   $q = 9$ digits/$p = 20$ digits

Divisor       :   $n = (101101001)$

Dividend      :   $A = (10101010101010101010)$

<Preparation>

Jump Parameter :   $k = 3$ digits

① "i" is a binary n-digit value and:

000 ≤ i ≤ 111.

② The value of $r_i$ is calculated in relation to each value of i by the equation shown in the item (2).

Multiple Table

| No. | i | $r_i$ |
|---|---|---|
| 1 | 0 0 0 | 0 0 0 1 0 1 1 0 1 0 0 1 |
| 2 | 0 0 1 | 0 0 1 0 1 1 0 1 0 0 1 0 |
| 3 | 0 1 0 | 0 1 0 0 0 0 1 1 1 0 1 1 |
| 4 | 0 1 1 | 0 1 1 1 0 0 0 0 1 1 0 1 |
| 5 | 1 0 0 | 1 0 0 0 0 1 1 1 0 1 1 0 |
| 6 | 1 0 1 | 1 0 1 1 0 1 0 0 1 0 0 0 |
| 7 | 1 1 0 | 1 1 0 0 1 0 1 1 0 0 0 1 |
| 8 | 1 1 1 | 1 1 1 0 0 0 0 1 1 0 1 0 |

<Residue Calculation>

| | |
|---|---|
| First Stage | $: p = 2\,0 \qquad : A = 10101010101010101010$ |
| | $[\,p > k + q\,] : S = 101010101010$ |
| | $i = 101$ |
| | $[\,S < r_i\,] \quad : \quad r_i = 101101001000$ |
| | $S \Leftarrow (\,S + n - r_i\,) = \qquad 011001011$ |
| Second Stage | $: p = 1\,7 \qquad : A = 01100101110101010$ |
| | $[\,p > k + q\,] : S = 011001011101$ |
| | $i = 011$ |
| | $[\,S < r_i\,] \quad : \quad r_i = 011100001101$ |
| | $S = (\,S + n - r_i\,) = \qquad 010111001$ |
| Third Stage | $: p = 1\,4 \qquad : A = 01011100101010$ |
| | $[\,p > k + q\,] : S = 010111001010$ |
| | $i = 010$ |
| | $[\,S > r_i\,] \quad : \quad r_i = 010000111011$ |
| | $S = (\,S + n - r_i\,) = \qquad 110011111$ |
| Fourth Stage | $: p = 1\,1 \qquad : A = 011001111110$ |
| | $[\,p < k + q\,] \text{ AND } [\,p > q\,]$ |
| | $: S = 011001111110$ |
| | $i = 011$ |
| | $[\,S < r_i\,] \quad : \quad r_i = 011100001101$ |
| | $S = (\,S + n - r_i\,) = \qquad 011011110$ |

Completion    : [ p < k + q ] AND [ p < q ]

Residue = 011011110

Thus, the residue calculation can be carried out by executing the process four times.

```
        Divisor
        _____
101101001   101010101010101010 :  Dividend
        +)    101101001
First Stage  : -)101101001000      ... ... ... ... ⑥
        _____
            011001011101
        +)    101101001
Second Stage  : -)011100001101      ... ... ... ④
        _____
            010111001010
   Third Stage  : -)010000111011      ... ... ③
        _____
            011001111110
        +)    101101001
 Fourth Stage  : -)011100001101      ... ④
        _____
            011011110 :  Residue
```

The residue calculation algorism used in this embodiment is based on the procedure of division calculated on paper, so that, when a residue is calculated from a binary a-digit dividend and a binary b-digit divisor and when the calculation time by calculation on paper is assumed to be $T(a - b)$, the calculation time according to the present invention is represented by $T((a - b) / k)$. That is, it is possible to provide the same effect as that defined when the difference between the digits of the dividend and the divisor is $(1/k)$. Accordingly, the necessary calculation time based on the procedure of calculation on paper is equal to that required by the calculation method of this embodiment, when the value of the jumper parameter k (the number of digits of a binary value) is 1 in this embodiment, but it is possible to calculate at a speed k times higher than that of a method using the procedure of calculating on paper, when the value of k is set to be equal to or more than 2.

In the above-described known example in which the dividing calculation method in multiple-length is employed, a quotient is obtained in the first place through dividing calculation in multiple-length, and the residue is then calculated from the obtained quotient. Therefore, it is necessary for the result of this calculation to be corrected, and a complicated operation circuit is thereby needed.  In this embodiment, the residue is directly obtained if only the subtraction process using the multiple of the divisor is repeated.  Thus, the number of processing steps are reduced and the operation circuit is simplified according to the present invention.

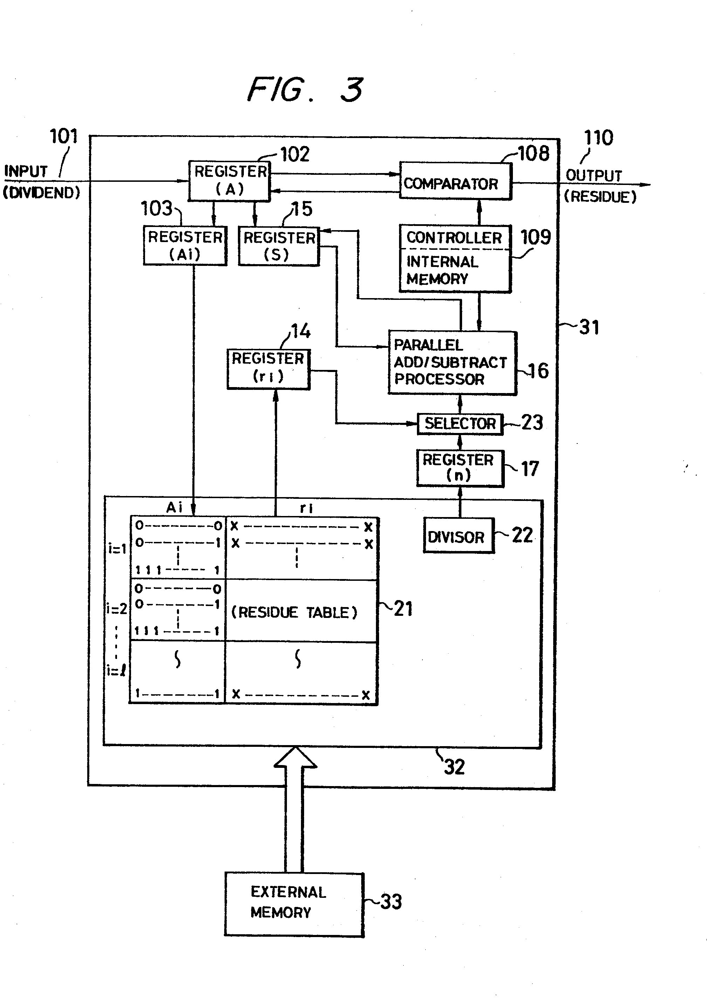

Next, an apparatus which is the second embodiment of the present invention and which is capable of performing multiple-length residue calculation at a high speed will be described hereunder.  Fig. 3 is a block diagram showing a high-speed residue calculating apparatus according to the present invention.  This apparatus is composed of two blocks:  a section 31 for carrying out the residue calculation process; and an external memory 33 including a table in which a divisor and a plurality of multiples of the divisor are memorized.

The item of input data 101 supplied to this apparatus is the dividend in residue calculation, which is memorized in the register 102.  The upper m digits of the item of data memorized in the register 102 is split into unitary k-digit figures ($k \geq 2$), and k-digit values thereby obtained are stored in the register 103, as the parameter i for searching partial residues.  A divisor 22 and a residue table 21 which has been memorized in an external memory 33 are inputted into an internal memory 32. A partial residue is referred to the value in the register 103 and stored in a register 14, and the divisor is stored in a register 17. The lower m digits of the item of data stored in the register 102 is inputted into a register 15. The item of data which has been stored in either the register 14 or the register 17 is selected by a selector 23 and is processed, together with the data stored in the register 15, by a parallel subtractor 16. The comparator 108 carries out loop and end processes on the basis of the results of the processing in the subtractor 16. These processes are controlled by the controller 109 having an internal memory. An item of output data 11 is obtained as the residue by repeating these processes.

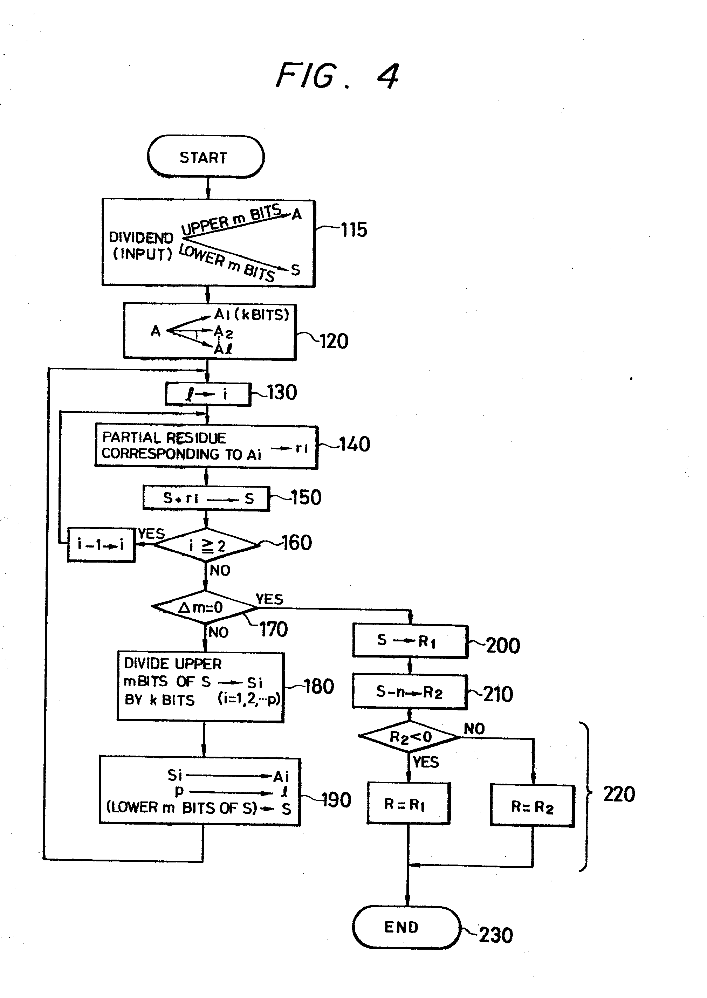

Next, the operation of the component elements shown in Fig. 3 will be described with reference to a flowchart shown in Fig. 4 on the basis of the processing procedures from the dividend input to the residue output.

<Residue Calculation>

Step 115: A dividend (2m digits) is inputted. The value of the upper m digits is

assumed to be A, and the lower m digits is assumed to be S.

Step 120: The value of A is split into k-digit figures. The values thereby obtained are assumed to be $A_i$ (i = 1, 2, ....$\ell$: $\ell$ : m = $\ell \cdot$k) in order of lower to upper digit figures.

Step 130: $\ell \rightarrow$ i is assumed.

Step 140: The value of $A_i$ is set as the parameter, and the partial residue $r_i$ (m digits) is referred in the memory area.

Step 150: $(S + r_i) \rightarrow S$

(note) The digit number of S: m — m + $\Delta$m

Step 160: If i $\geq$ 2, the process jumps to Step 140 by assuming i - 1 $\rightarrow$ i.

Step 170: If $\Delta$m = 0, the process jumps to Step 200.

Step 180: The upper $\Delta$m-digit figure of S is split into unitary k-digit figures. The values thereby obtained are assumed to be $S_i$ (i = 1, 2, .... p). If necessary, '0' is added to the upper place of S such that $\Delta$m = $\alpha$k ($\alpha$: a positive integral number).

Step 190: $S_i \rightarrow A_i$, p $\rightarrow \ell$

S (the value of the lower m-digit figure) $\rightarrow$ S

The process jumps to Step 130.

Step 200: $S \rightarrow R_i$

Step 210: $(S - B) \rightarrow R_2$

Step 220: If $R_2 < 0$, $R = R_1$.

If $R_2 \geq 0$, $R = R_2$.

Step 230: Halt   Residue R

The residue can be obtained at a high speed through the above processing steps. Lastly, a simple example of the processing procedures is described by using concrete values.

<Setting>

Divisor: 101011011 (m = 9 digits)

Dividend:   101010101010101010 (2m = 18 digits)

Jump Parameter: k = 3

Table Searching Parameter: $000 \leq A_i \leq 111$

Dividend/Residue Table:

| $i$ | $A_i$ | $r_i$ |
|---|---|---|
| | 0 0 0 | 0 0 0 0 0 0 0 0 0 |
| | 0 0 1 | 0 1 0 1 0 0 1 0 1 |
| | 0 1 0 | 1 0 1 0 0 1 0 1 0 |
| 1 | 0 1 1 | 0 1 0 0 1 0 1 0 0 |
| | 1 0 0 | 1 0 0 1 1 1 0 0 1 |
| | 1 0 1 | 0 1 0 0 0 0 0 1 1 |
| | 1 1 0 | 1 0 0 1 0 1 0 0 0 |
| | 1 1 1 | 0 0 1 1 1 0 0 1 0 |
| | 0 0 0 | 0 0 0 0 0 0 0 0 0 |
| | 0 0 1 | 1 0 0 0 1 0 1 1 1 |
| | 0 1 0 | 0 1 1 0 1 0 0 1 1 |
| 2 | 0 1 1 | 0 1 0 0 0 1 1 1 1 |
| | 1 0 0 | 0 0 1 0 0 1 0 1 1 |
| | 1 0 1 | 0 0 0 0 0 0 1 1 1 |
| | 1 1 0 | 1 0 0 0 1 1 1 1 0 |
| | 1 1 1 | 0 1 1 0 1 1 0 1 0 |
| | 0 0 0 | 0 0 0 0 0 0 0 0 0 |
| | 0 0 1 | 0 1 0 0 1 0 1 1 0 |
| | 0 1 0 | 1 0 0 1 0 1 1 0 0 |
| 3 | 0 1 1 | 0 0 1 1 0 0 1 1 1 |
| | 1 0 0 | 0 1 1 1 1 1 1 0 1 |
| | 1 0 1 | 0 0 0 1 1 1 0 0 0 |
| | 1 1 0 | 0 1 1 0 0 1 1 1 0 |
| | 1 1 1 | 0 0 0 0 0 1 0 0 1 |

<Residue Calculation>

①   Addition of Partial Residue

  1.  Setting of Input Data (Step 115)

$$m = 9 \; ; \; A = 101010101$$
$$S = 010101010$$

  2.  Setting of Searching Parameter and Searching Time (Step 120)

$$k = 3 \; ; \; A_1 = 101, A_2 = 010, A_3 = 101$$
$$\ell = m / k \; ; \; \ell = 3$$

  3.  Searching and Addition of Partial Residue (Steps 130 to 160)

$$A_1 = 101 \; ; \; r_1 = 010000011$$
$$A_2 = 010 \; ; \; r_2 = 011010011$$
$$A_3 = 101 \; ; \; r_3 = 000111000$$
$$S = (S + r_1 + r_2 + r_3) = 1000111000$$

②   Correction of Residue Calculation (m ≠ 0)

  1.  Various Data Setting (Steps 170 to 190)

$$S_1 = 001 \; ; \; A_1 = 001$$
$$p = 1 \; ; \; \ell = 1$$
$$S = 000111000$$

2. Searching and Addition of Partial Residue

(Steps 130 to 160)

$$A_1 = 001 ; \quad r_1 = 010100101$$

$$S = ( r_1 + S ) = 011011101$$

3. Residue Determination

(Step 170, Steps 200 to 230)

$$m = 0 ; \quad R_1 = 011011101$$

$$R_2 < 0; \quad \text{Residue } R = R_1 = 011011101$$

In the above-described embodiment, nine steps $(2m - m)$ of division and quotient determination processes are needed by the residue calculation method using the conventional division process. In this method, in contrast, multiple-length residue calculation is achieved by carrying out three steps $((2m - m)/k)$ of the process of partial residue search and division and a number of correction steps.

Dividend       Divisor

$$101010101010101010 \;(\text{mod } n)$$

$$101000000000000000 \;(\text{mod } n)$$

$$010000000000000 \;(\text{mod } n) \leftarrow ① \quad \text{Partial Residue}$$
$$\text{Addition}$$

$$101000000000 \;(\text{mod } n)$$

$$\begin{array}{r} + )\quad 010101010 \\ \hline 001000111000 \end{array}$$

$$001000000000 \;(\text{mod } n) \leftarrow ② \quad \text{Correction}$$
$$\text{Operation}$$

$$\begin{array}{r} + )\quad 000111000 \\ \hline \end{array}$$

Residue    $: 11011101 \;(R < n)$

When a residue is calculated from a binary 2m-digit dividend and a binary m-digit divisor and when the calculation time needed by the residue calculation method using division process is assumed to be $T(2m - m)$, the calculation time based on the residue calculation algorism according to the method of this embodiment is assumed to be about $T((2m - m)/k)$. According to the present invention is represented by $T((a - b)/k)$. Accordingly, it is not discriminative, when the value of the jumper parameter k is 1, but it is possible to calculate at a speed k times higher, when the value of k is set to be equal to or more than 2.

In the above-described known example in which the dividing calculation method in multiple-length is employed, a quotient is obtained in the first place through dividing calculation in multiple-length, and the residue is then calculated from the obtained quotient. Therefore, the operation circuit and the calculation algorism are complicated. In this embodiment, the procedure for obtaining quotients are omitted, and the residue is directly obtained by carrying out only divisions for correction and the repeating process of addition using the partial residues. Thus, the number of processing steps are reduced and the operation circuit is simplified. It is possible to perform parallel calculation by converting the residue calculation into additions and subtractions. According to the present invention, as described above, it is possible to provide a residue calculating apparatus with a simple hardware arrangement capable of executing high-speed residue calculations.

CLAIMS:

1. An apparatus for calculating the residue for an optional dividend by using a given divisor, comprising

memory means (102; 33) for storing a previously calculated parameter relative to said divisor;

means (103, 105) for reading said parameter from said memory means (102; 33) and

means (111; 31) for carrying out a residue calculated by using said parameter read out.

2. The apparatus of claim 1, wherein said parameter is a multiple of said divisor which is more than two orders in magnitude larger than said divisor, said parameter being read from said memory means (102; 33) in accordance with the value of more than two upper digits of said dividend so as to be used by subtracting means (107) as a subtraction value from said dividend at an intermediate stage of the division.

3. The apparatus of claim 1, wherein said parameter is a partial residue relative to said divisor in each section defined by splitting said dividend into given unitary digit figures, said parameter being read from said memory means (33) in accordance with said section so as to be used by adding means (16) as an addition value for an addition operation as between partial residues at intermediate stages of the division.


4.  The apparatus of

claim 3, wherein said adding means (16) is a bit-slice type

parallel adder.

0208238

## FIG. 1

# FIG. 2

```
        ┌──────────┐
        │  START   │
        └────┬─────┘
             │                    201
        ┌────┴─────┐
        │ INPUT A  │
        └────┬─────┘
             │                    202
             ▼
        ◇ p : k+q ◇ ─────┐ ≧
      < │                │
        ▼   203          │
     ◇ p : q ◇ ─┐        │
   < │          │ ≧      │
     │      ┌───┴────────┴──┐
     │      │ REPLACE       │  204
     │      │ UPPER(q+k-p)  │
     │      │ BITS OF A TO 0│
     │      └───────┬───────┘
     │              │
     │        ┌─────┴──────┐
     │        │    UPPER   │ 205
     │        │ i← k BITS OF A│
     │        └─────┬──────┘
     │              │         206
     │        ┌─────┴──────┐
     │        │   VALUE    │
     │        │ ri←CORRESPONDING│
     │        │    TO i    │
     │        └─────┬──────┘
     │              │         207
     │        ┌─────┴──────┐
     │        │  UPPER(k+q)│
     │        │ S← BITS OF A│
     │        └─────┬──────┘
     │              │         208
     │              ▼
     │         ◇ S : ri ◇
     │       < ┌──────┴──────┐ ≧
     │    209  ▼             ▼  210
     │   ┌──────────┐  ┌──────────┐
     │   │ S←S+n-ri │  │  S←S-ri  │
     │   └────┬─────┘  └────┬─────┘
     │        └──────┬──────┘
     │               │         211
     │        ┌──────┴──────┐
     │        │  REPLACE    │
     │        │ UPPER PART OF│
     │        │  A TO S     │
     │        └──────┬──────┘
     │               │
     └───────┬───────┘
             │             212
        ┌────┴─────┐
        │  R← A    │
        └────┬─────┘
             │
        ┌────┴─────┐
        │   END    │
        └──────────┘
```

# FIG. 3

## FIG. 4

```
         ┌─────────┐
         │  START  │
         └────┬────┘
              │
   ┌──────────────────────────┐
   │              UPPER m BITS→A│~115
   │ DIVIDEND                   │
   │ (INPUT)  LOWER m BITS    →S│
   └──────────┬───────────────┘
              │
      ┌──────────────┐
      │      →Ai(kBITS)│~120
      │ A  ─→ A₂        │
      │      →Aℓ        │
      └──────┬────────┘
              │
         ┌────────┐
         │ ℓ → i  │~130
         └────┬───┘
              │
   ┌──────────────────────┐
   │ PARTIAL RESIDUE      │~140
   │ CORRESPONDING TO Ai →ri│
   └──────────┬───────────┘
              │
      ┌──────────────┐
      │ S+ri ──→ S   │~150
      └──────┬───────┘
              │
   ┌───────┐ YES ◇ i≧2 ◇~160
   │i-1→i  │◄────
   └───────┘      │NO
                  │
              ◇ △m=0 ◇──YES──┐
                  │NO ~170    │
                  │      ┌─────────┐
   ┌──────────────────┐ │ S → R₁  │~200
   │ DIVIDE UPPER     │ └────┬────┘
   │ mBITS OF S →Si   │~180  │
   │ BY k BITS (i=1,2,⋯p)│  ┌─────────┐
   └────────┬─────────┘   │ S-n→R₂  │~210
            │             └────┬────┘
   ┌────────────────────┐     │
   │ Si ──────→Ai       │  ◇ R₂<0 ◇──NO──┐
   │ p ───────→ℓ        │~190  │YES       │
   │(LOWER m BITS OF S)→S│  ┌──────┐ ┌──────┐
   └────────────────────┘  │R=R₁  │ │R=R₂  │~220
                           └──┬───┘ └──┬───┘
                              └────┬───┘
                              ┌─────────┐
                              │   END   │~230
                              └─────────┘
```